# EUROPÄISCHE PATENTSCHRIFT

(11) **EP 3 536 165 B1**
(45) Veröffentlichungstag und Bekanntmachung des Hinweises auf die Patenterteilung: **26.05.2021**
(21) Anmeldenummer: 19159158.5
(22) Anmeldetag: 25.02.2019
(51) Int. Cl.: A23L 3/365, A23B 4/07

(54) **AUFTAUVERFAHREN FÜR LEBENSMITTEL**
THAWING METHOD FOR FOOD
PROCÉDÉ DE DÉCONGÉLATION POUR DENRÉES ALIMENTAIRES

(30) Priorität: 07.03.2018 DE 102018105265
(43) Veröffentlichungstag der Anmeldung: 11.09.2019
(73) Patentinhaber: Ferdinand Henneken GmbH, 33181 Bad Wünnenberg (DE)
(72) Erfinder: Henneken, Kai, 33181 Bad Wünnenberg (DE); Henneken, Volker Ferdinand, 33181 Bad Wünnenberg (DE)
(74) Vertreter: Wickord, Wiro

(56) Entgegenhaltungen:
- EP-A1- 0 574 327
- DE-U1-202010 000 603
- Anonymous: "Massieranlagen / Massaging Systems- MAGNUM II SL/CSL", , 1. April 2016 (2016-04-01), Seiten 1-8, XP055602030, Gefunden im Internet: URL:http://www.compass-tr.com/static/files /inject-star/tumbler/magnum2-serisi/Magnum -II_Versand.pdf [gefunden am 2019-07-03]

## Beschreibung

Die Erfindung betrifft ein Auftauverfahren für Lebensmittel, insbesondere Fleisch, nach dem Oberbegriff des Patentanspruchs 1.

Klassischerweise werden Lebensmittel heute aufgetaut, indem sie in einem Auftauraum über einen längeren Zeitraum schonend erwärmt werden. Nachteilig hierbei ist, dass die Lebensmittel sehr langsam aufgetaut werden. Ferner ist es so, dass während des Auftauens Flüssigkeit aus den Lebensmitteln austritt mit der Folge, dass es zu einem Gewichtsverlust kommt und ein wirtschaftlicher Schaden entsteht. Zudem enthält die ausgetretene Flüssigkeit Komponenten, beispielsweise Proteine, die dann in den nachgelagerten Verarbeitungsprozessen nicht mehr zur Verfügung stehen. Es kann insofern zu Produktfehlern und einer reduzierten Produktqualität kommen.

Um den Nachteilen des klassischen Auftauverfahrens entgegenzuwirken, werden zunehmend sogenannte Tumbler eingesetzt zum Auftauen von Lebensmitteln und insbesondere Fleisch. In den Tumblern, die eine rotierende Trommel für die Lebensmittel aufweisen, wird infolge der Rotation und der resultierenden mechanischen Einwirkung auf die Lebensmittel die beim Auftauen entstehende Flüssigkeit wieder in das Produkt eingearbeitet.

Beispielsweise verfügt ein Tumbler über einen Doppelmantel mit Fluidkanälen. Die Fluidkanäle können zum Auftauen der Lebensmittel von einer erwärmten Flüssigkeit (Sole) durchströmt werden. Zusätzlich kann erwärmter Wasserdampf in die Trommel eingebracht werden, um den Auftauprozess weiter zu beschleunigen. Der Wasserdampf tritt großflächig in Kontakt mit der Oberfläche der Lebensmittel und sorgt so für deren gleichmäßige und schnelle Erwärmung. Nachteilig ist hier jedoch, dass durch das Zuführen von Wasserdampf Flüssigkeit in Form von Wasser zugeführt wird. Dringt das Wasser in die Lebensmittel ein, kommt es zu einer Qualitätsreduzierung. Darüber hinaus können die nachfolgenden Verarbeitungsprozesse beeinträchtigt werden, wenn sich das Wasser mit der beim Auftauen aus den Lebensmitteln austretenden Flüssigkeit durchmischt und sich ein Abrieb auf der Produktoberfläche beziehungsweise in dem Behälter bildet. Der Abrieb kann nur zu einem sehr geringen Teil wieder in das Produkt eingearbeitet werden. Zudem wird er als Qualitätsmangel wahrgenommen. Schließlich ist es so, dass das Produkt mit dem Abrieb nach dem Auftauen bei der Weiterverarbeitung Transportbänder, Filtersysteme oder andere Bearbeitungsanlagen verunreinigt.

Aus der DE 20 2010 000 603 U1 ist ein Tumbler ein Auftauverfahren von Lebensmitteln bekannt, bei dem erwärmte Luft durch den Behälter zirkuliert und wobei die erwärmte Luft aus dem Behälter abgeführt wird und, durch einen Filter gereinigt beziehungsweise entkeimt und in einer Heizeinrichtung erwärmt, recycliert in den Behälter zurückgeführt wird. Durch die Rückführung der erwärmten Luft ist hierbei die Gefahr einer Verkeimung der Lebensmittel gegeben.

In dem Prospekt Anonymous: "Massieranlagen / Massaging Systems- MAGNUM II SL/CSL" aus April 2016 ist ein Tumbler angegeben, der eine Vakuumbeschickung ermöglicht.

Aufgabe der vorliegenden Erfindung ist es, ein verbessertes Auftauverfahren für Lebensmittel und insbesondere Fleisch anzugeben.

Zur Lösung der Aufgabe weist die Erfindung die Merkmale des Patentanspruchs 1 auf.

Der besondere Vorteil der Erfindung besteht darin, dass beim Zuführen von erwärmter Luft auf die Zugabe von Flüssigkeit verzichtet oder jedenfalls die Flüssigkeitsmenge reduziert werden kann mit der Folge, dass einem unerwünschten Eintrag von Fremdflüssigkeit in das Produkt und der Bildung eines Abriebs entgegengewirkt wird. Zugleich erfolgt der Auftauprozess schonend und schnell, da der Energieeintrag vergleichsweise hoch ist und die erwärmte Luft die Lebensmittel in dem Behälter gleichmäßig umströmt.

Nach der Erfindung ist insbesondere vorgesehen, dass die Drehachse des Behälters geneigt zur Vertikalen orientiert ist. Beispielsweise ist die Drehachse horizontal erstreckt vorgesehen. Es kann vorgesehen sein, dass die Zuführungsöffnung für die erwärmte Luft an einer ersten Stirnseite des Behälters vorgesehen ist und dass an einer der ersten Stirnseite gegenüberliegenden zweiten Stirnseite des Behälters die Austrittsöffnung vorgesehen ist.

Im Sinne der Erfindung wird dann von erwärmter Luft gesprochen, wenn die dem Behälter zugeführte Luft aufgrund ihrer Temperatur geeignet ist, die in dem Behälter vorgesehenen Lebensmittel aufzutauen. Wenn die Lebensmittel beispielsweise eine Temperatur von -18 °C aufweisen und die Umgebungstemperatur außerhalb des Behälters 20 °C beträgt, mag die erwärmte Luft mit einer Temperatur von beispielsweise 6 °C zugeführt werden.

Beispielsweise kann die erwärmte Luft über die Zuführungsöffnung in den Behälter eingepumpt werden. Zum Ablassen der erwärmten Luft kann der Austrittsöffnung beispielsweise ein betätigbares Ventil zugeordnet sein.

Nach einer bevorzugten Ausführungsform der Erfindung wird die erwärmte Luft mittels einer Pumpe gefördert. Insbesondere kann die erwärmte Luft mittels der Pumpe durch die Zuführungsöffnung in den Behälter eingezogen und durch die Austrittsöffnung abgesaugt werden. Vorteilhaft ergibt sich durch das Vorsehen der Pumpe und das Durchsaugen der erwärmten Luft durch den Behälter ein konstruktiv zugleich einfacher und robuster Aufbau.

Nach der Erfindung rotiert der mit den Lebensmitteln befüllte Behälter um die Drehachse, während die erwärmte Luft eingezogen und abgesaugt wird. Vorteilhaft wird durch das gleichzeitige Rotieren des Behälters und das Zuführen und/oder Absaugen der Luft eine besonders effektive Durchmischung und in der Folge ein zugleich schonender und schneller Auftauvorgang bereitgestellt.

Nach der Erfindung wird die erwärmte Luft zugleich in den Behälter eingezogen und aus dem Behälter abgesaugt. Es ist insofern nach der Erfindung ein kontinuierliches und besonders schnelles beziehungsweise wirtschaftliches Auftauverfahren gebildet. Insbesondere kann vorgesehen sein, dass die erwärmte Luft kontinuierlich in dem Behälter eingezogen und aus dem Behälter abgesaugt wird.

Nach der Erfindung sind an dem Behälter mantelseitig Fluidkanäle vorgesehen, welche von einer temperierten Flüssigkeit durchströmt werden, während der mit den Lebensmitteln befüllte Behälter um die Drehachse rotiert. Insbesondere kann die Flüssigkeit die Fluidkanäle des Behälters durchströmen, während die erwärmte Luft in den Behälter eingezogen beziehungsweise aus dem Behälter abgesaugt wird. Vorteilhaft kann durch das gleichzeitige fluidische Erwärmen des Behältermantels und das Zuführen beziehungsweise Absaugen der erwärmten Luft der Auftauprozess weiter optimiert werden. Es ist insbesondere so, dass eine gute Temperaturführung vorgesehen werden kann bei einer Kombination der beiden Verfahrensmerkmale.

Nach der Erfindung wird der Behälter über die Zuführungsöffnung mit den Lebensmitteln befüllt. Insbesondere kann die Befüllung mittels einer Vakuumbeschickung erfolgen. Es wird dann mittels der Pumpe Luft durch die Austrittsöffnung aus dem Behälter abgesaugt und infolge dessen die Lebensmittel über die Zuführungsöffnung eingesaugt. Der Zuführungsöffnung kann zu diesem Zweck ein Saugschlauch zugeordnet sein, über den die Lebensmittel aus einem bereitgestellten Container gesaugt werden. Vorteilhaft kann die Befüllung des Behälters mittels der Vakuumbeschickung sehr schnell erfolgen. Insgesamt ist das erfindungsgemäße Verfahren insofern besonders wirtschaftlich.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnung dient dabei lediglich beispielhaft der Erklärung der Erfindung. Sie hat keinen einschränkenden Charakter.

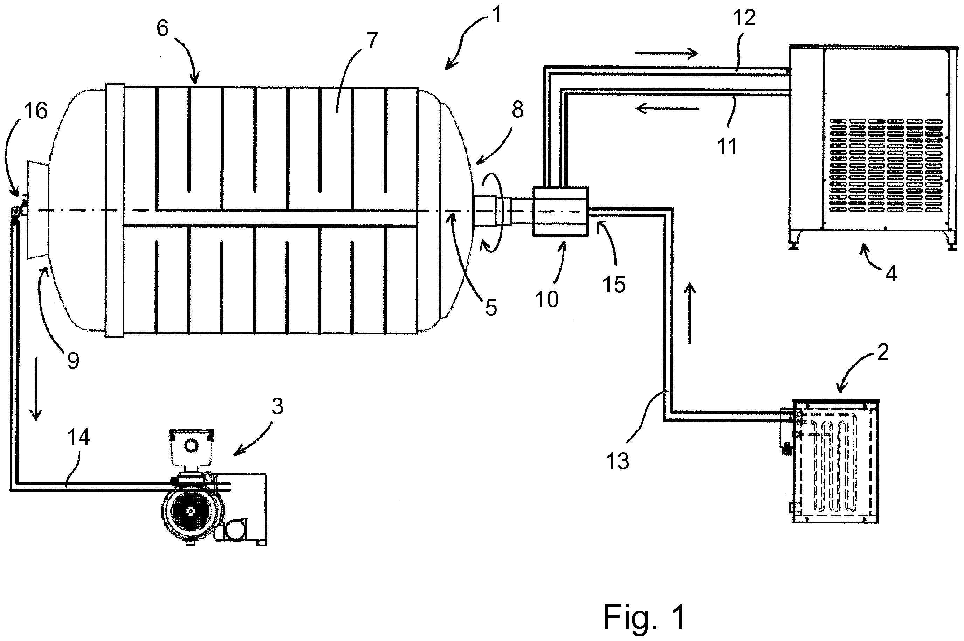

Es zeigt
- Fig. 1: eine Prinzipdarstellung einer Anordnung zur Durchführung des erfindungsgemäßen Auftauverfahren.

Die Anordnung umfasst als wesentliche Funktionskomponenten einen Tumbler 1, ein Klimagerät 2 zum Erwärmen von Luft, eine Pumpe 3 sowie eine Flüssigkeitsklimabox 4. Der Tumbler 1 weist einen um eine horizontal erstreckte Drehachse 5 drehbaren Behälter 6 auf. Der Behälter 6 sieht einen temperierbaren Doppelmantel mit einem Fluidkanal 7 sowie einander gegenüberliegende Stirnseiten 8, 9 auf. Einer ersten Stirnseite 8 ist eine Drehdurchführung 10 zugeordnet. Zu der Drehdurchführung 10 sind von der Flüssigkeitsklimabox 4 eine Zulaufleitung 11 und eine Rücklaufleitung 12 für eine Flüssigkeit vorgesehen. Die Flüssigkeit, die in der Flüssigkeitsklimabox 4 temperiert wird und über die Zulaufleitung 11 zu der Drehdurchführung 10 geführt ist, durchströmt dann den Fluidkanal 7 des Tumblers 1 und gelangt über die Rücklaufleitung 12 zurück zur Flüssigkeitsklimabox 4. Die Flüssigkeit kann in der Flüssigkeitsklimabox 4 erwärmt beziehungsweise gekühlt werden, um den Fluidkanal 7 mit einer vorgegebenen Temperatur zu durchströmen. Insbesondere kann die Flüssigkeitsklimabox 4 Mittel vorsehen, um den Volumenstrom der Flüssigkeit einzustellen beziehungsweise zu ändern.

Zu der Drehdurchführung 10 ist des Weiteren eine Zuführungsleitung 13 geführt. Die Zuführungsleitung 13 verbindet die Drehdurchführung 10 des Tumblers 1 mit dem Klimagerät 2. Von dem Klimagerät 2 wird erwärmte Luft bereitgestellt. Die erwärmte Luft gelangt über die Zuführungsleitung 13 und die Drehdurchführung in den Behälter 6 des Tumblers, sofern die Pumpe 3 betrieben wird und mittels der Pumpe 3 über eine von der Pumpe 3 zu dem Tumbler 1 geführte Absaugleitung 14 Luft aus dem Behälter 6 abgesaugt wird.

Um die erwärmte Luft durch den Behälter 6 zu führen, sind an der ersten Stirnseite 8 eine Zuführungsöffnung 15 für die erwärmte Luft und an der gegenüberliegenden zweiten Stirnseite 9 eine Austrittsöffnung 16 vorgesehen. Insbesondere kann vorgesehen sein, dass die Zuführungsöffnung 15 und die Austrittsöffnung 16 koaxial zur Drehachse 5 des Behälters 6 vorgesehen sind. Die Zuführungsöffnung 15 kann der Drehdurchführung 10 des Tumblers 1 zugeordnet sein.

Zum Auftauen von Lebensmitteln wird der Behälter 6 des Tumblers 1 mit Lebensmitteln befüllt. Es wird dann der Behälter 6 des Tumblers 1 mittels einer nicht dargestellten Antriebseinheit um die Drehachse 5 rotiert. Der Fluidkanal 7 wird von der temperierten Flüssigkeit durchströmt und zusätzlich wird von dem Klimagerät 2 erwärmte Luft mittels der Pumpe 3 in den Behälter 6 eingezogen und aus dem Behälter 6 abgesaugt. Die Lebensmittel in dem Behälter 6 werden dann schnell und schonend erwärmt. Zugleich wird während des Auftauens aus den Lebensmitteln austretende Flüssigkeit infolge der rotierenden Bewegung wieder in die Lebensmittel eingearbeitet mit der Folge, dass die Beschaffenheit der Lebensmittel sich während des Auftauens nicht oder nur in sehr geringem Maße ändert.

Beim Auftauen kann abhängig von der Beschaffenheit der Lebensmittel und/oder der Menge der Auftauprozess insbesondere dadurch beeinflusst beziehungsweise gestaltet werden, dass die Menge und/oder die Temperatur der erwärmten Luft einerseits adäquat gewählt wird. Andererseits können die Temperatur und der Durchfluss der Flüssigkeit durch den Fluidkanal 7 des Behälters 6 angepasst werden. Es kann insbesondere vorgesehen sein, dass zum Auftauen der Lebensmittel gleichzeitig erwärmte Luft durch den Behälter 6 geführt wird und der Fluidkanal 7 von der Flüssigkeit durchströmt wird. Beispielsweise kann zum Auftauen entweder die durch den Fluidkanal 7 geführte Flüssigkeit oder die erwärmte Luft verwendet werden.

Nach der Erfindung kann insbesondere vorgesehen sein, dass die erwärmte Luft kontinuierlich durch den Behälter 6 gefördert wird. Die erwärmte Luft wird dann anders als heute der Wasserdampf nicht sequenziell zugeführt. Weiter kann vorgesehen sein, dass an dem Behälter 6 mehr als ein Fluidkanal 7 für die Flüssigkeit vorgesehen sein.

Zum Befüllen des Behälters 6 kann beispielsweise vorgesehen sein, dass Luft aus dem Behälter 6 mittels der Pumpe 3 abgepumpt wird und über die Zuführungsöffnung 15 die Lebensmittel in den Behälter 6 eingesaugt werden. Zu diesem Zweck kann an der Zuführungsöffnung 15 insbesondere ein Saugschlauch vorgesehen sein, welcher in einem bereitgestellten Container für die Lebensmittel geführt ist.

## Patentansprüche

1. Auftauverfahren für Lebensmittel, insbesondere Fleisch, wobei die Lebensmittel in einem um eine Drehachse (5) rotierbaren Behälter (6) mit einander gegenüberliegenden Stirnseiten (8), (9) eingefüllt und nach dem Befüllen des Behälters (6) erwärmt und rotiert werden, wobei einer ersten Stirnseite (8) eine Drehdurchführung (10) zugeordnet ist, wobei zum Erwärmen der Lebensmittel erwärmte Luft durch eine Zuführungsöffnung (15) in den Behälter (6) zugeführt und durch eine Austrittsöffnung (16) abgeführt wird, wobei an der ersten Stirnseite (8) die Zuführungsöffnung (15) für die erwärmte Luft und an einer gegenüberliegenden zweiten Stirnseite (9) die Austrittsöffnung (16) vorgesehen ist und wobei die Zuführungsöffnung (15) der Drehdurchführung (10) zugeordnet ist, **dadurch gekennzeichnet, dass** an dem Behälter (6) ein temperierbarer Doppelmantel mit mantelseitigen Fluidkanälen (7) vorgesehen ist, welche von einer temperierten Flüssigkeit durchströmt werden, dass der Behälter (6) über die Zuführungsöffnung (15) mit den Lebensmitteln befüllt wird, dass zu der Drehdurchführung (10) von einer Flüssigkeitsklimabox (4) eine Zulaufleitung (11) und eine Rücklaufleitung (12) für die Flüssigkeit vorgesehen sind, wobei die Flüssigkeit über die Zulaufleitung (11) zu der Drehdurchführung (10) geführt ist, dann den Fluidkanal (7) durchströmt und über die Rücklaufleitung (12) zurück zu der Flüssigkeitsklimabox (4) gelangt, wobei die Flüssigkeit in der Flüssigkeitsklimabox (4) gekühlt wird, und dass zugleich die Fluidkanäle (7) von der Flüssigkeit durchströmt werden und die erwärmte Luft kontinuierlich in den Behälter (6) zugeführt und aus dem Behälter (6) abgeführt wird, während der mit den Lebensmitteln befüllte Behälter (6) um die Drehachse (5) rotiert.

2. Auftauverfahren nach Anspruch 1, **dadurch gekennzeichnet, dass** die erwärmte Luft mittels einer Pumpe (3) gefördert wird.

3. Auftauverfahren nach Anspruch 1 oder 2, **dadurch gekennzeichnet, dass** die erwärmte Luft mittels der Pumpe (3) durch die Zuführungsöffnung (15) in den Behälter (6) eingezogen und durch die Austrittsöffnung (16) abgesaugt wird.

4. Auftauverfahren nach einem der Ansprüche 1 bis 3, **dadurch gekennzeichnet, dass** die Lebensmittel über eine gemeinsame Befüll- und Entnahmeöffnung, die an dem Behälter (6) bevorzugt stirnseitig und bevorzugt koaxial zu der Drehachse (5) vorgesehen ist, in den Behälter (6) eingefüllt und aus diesem entnommen werden.

5. Auftauverfahren nach einem der Ansprüche 1 bis 4, **dadurch gekennzeichnet, dass** die Lebensmittel mittels einer Vakuumbeschickung in den Behälter (6) eingefüllt werden, indem mittels der Pumpe (3) Luft durch die Austrittsöffnung (16) aus dem Behälter (6) abgesaugt wird und die Lebensmittel eingesaugt werden.

6. Auftauverfahren nach einem der Ansprüche 1 bis 5, **dadurch gekennzeichnet, dass** die erwärmte Luft koaxial zur Drehachse (5) zugeführt und/oder abgeführt wird und/oder dass die Drehachse (5) gegenüber der Vertikalen geneigt vorgesehen wird.

7. Auftauverfahren nach einem der Ansprüche 1 bis 6, **dadurch gekennzeichnet, dass** die Lebensmittel über die erste Stirnseite (8) des Behälters (6) in ebendiesem eingefüllt und/oder über die der ersten Stirnseite (8) gegenüberliegenden zweiten Stirnseite (9) aus dem Behälter (6) entnommen werden.

8. Auftauverfahren nach einem der Ansprüche 1 bis 7, **dadurch gekennzeichnet, dass** ein Klimagerät (2) vorgesehen ist zum Erwärmen der Luft, wobei das Klimagerät (2) bevorzugt ortsfern von dem Behälter (6) vorgesehen ist und die erwärmte Luft über eine Zuführungsleitung (13) von dem Klimagerät (2) zu der Zuführungsöffnung (15) geführt wird.

## Claims

1. Defrosting process for foodstuffs, in particular meat, wherein the foodstuffs are filled into a container (6), rotatable about an axis of rotation (5) and comprising mutually opposed end faces (8), (9), and are heated and rotated after the container (6) has been filled, a first rotary feedthrough (10) being assigned to a first end face (8), heated air being supplied into the container (6) through a supply opening (15) and withdrawn through an exit opening (16) to heat the foodstuffs, the supply opening (15) for the heated air being assigned on the first end face (8) and the exit opening (16) being provided on an opposite, second end face (9), and the supply opening (15) being assigned to the rotary feedthrough (10), **characterised in that** a temperature-controllable double casing, comprising outer-face fluid ducts (7) flowed through by a temperature-controlled liquid, is provided on the container (6), **in that** the container (6) is filled with the foodstuffs via the supply opening (15), **in that** an inlet line (11) and a return line (12) for the liquid are provided from a liquid conditioning box (4) to the rotary feedthrough (10), the liquid being guided to the rotary feedthrough (10) via the inlet line (11), and subsequently flowing through the fluid duct (7) and arriving back at the liquid conditioning box (4) via the return line (12), the liquid being cooled in the liquid conditioning box (4), and **in that** at the same time the fluid ducts (7) are flowed through by the liquid and the heated air is continuously supplied into the container (6) and withdrawn from the container (6) while the container (6) filled with the foodstuffs rotates about the axis of rotation (5).

2. Defrosting process according to claim 1, **characterised in that** the heated air is conveyed by means of a pump (3).

3. Defrosting process according to either claim 1 or claim 2, **characterised in that** the heated air is drawn into the container (6) through the supply opening (15) by means of the pump (3) and sucked away through the exit opening (16).

4. Defrosting process according to any of claims 1 to 3, **characterised in that** the foodstuffs are filled into and removed from the container (6) via a joint filling and removal opening, which is provided on the container (6) at an end face and preferably coaxially with the axis of rotation (5).

5. Defrosting process according to any of claims 1 to 4, **characterised in that** the foodstuffs are filled into the container (6) by means of vacuum delivery, **in that**, by means of the pump (3), air is sucked out of the container (6) through the exit opening (16) and the foodstuffs are sucked in.

6. Defrosting process according to any of claims 1 to 5, **characterised in that** the heated air is suppled and/or withdrawn coaxially with the axis of rotation (5) and/or **in that** the axis of rotation (5) is provided at an inclination to the vertical.

7. Defrosting process according to any of claims 1 to 6, **characterised in that** the foodstuffs are filled into the container (6) via the first end face (8) thereof and/or removed from the container (6) via the second end face (9) opposite the first end face (8).

8. Defrosting process according to any of claims 1 to 7, **characterised in that** a conditioning device (2) is provided for heating the air, the conditioning device (2) preferably being provided remote from the container (6) and the heated air being guided from the conditioning device (2) to the supply opening (15) via a supply line (13).

## Revendications

1. Procédé de décongélation de denrées alimentaires, en particulier de viande, dans lequel les denrées alimentaires sont introduites dans un récipient (6) pouvant tourner autour d'un axe de rotation (5) et présentant des faces frontales opposées (8), (9), et sont chauffées et mises en rotation après le remplissage du récipient (6), une traversée rotative (10) étant associée à une première face frontale (8), de l'air chauffé étant amené dans le récipient (6) à travers une ouverture d'amenée (15) pour le réchauffement des denrées alimentaires et évacué à travers une ouverture de sortie (16), l'ouverture d'amenée (15) pour l'air chauffé étant prévue sur la première face frontale (8) et l'ouverture de sortie (16) sur une deuxième face frontale opposée (9), et l'ouverture d'amenée (15) étant associée à la traversée rotative (10), **caractérisé en ce qu'**il est prévu sur le récipient (6) une double enveloppe thermorégulable avec des canaux de fluide (7) côté enveloppe qui sont parcourus par un liquide à température régulée, que le récipient (6) est rempli de denrées alimentaires par l'ouverture d'amenée (15), qu'une conduite d'arrivée (11) et une conduite de retour (12) pour le liquide sont prévues vers la traversée rotative (10) à partir d'un caisson de climatisation de liquide (4), le liquide étant conduit vers la traversée rotative (10) par la conduite d'arrivée (11), s'écoulant ensuite dans le canal de fluide (7) et retournant dans le caisson de climatisation de liquide (4) par la conduite de retour (12), le liquide étant refroidi dans le caisson de climatisation de liquide (4), et que, en même temps, les canaux de fluide (7) sont parcourus par le liquide et l'air chauffé est continuellement amené dans le récipient (6) et évacué du récipient (6) pendant que le récipient (6) rempli de denrées alimentaires tourne autour de l'axe de rotation (5).

2. Procédé de décongélation selon la revendication 1, **caractérisé en ce que** l'air chauffé est transporté au moyen d'une pompe (3).

3. Procédé de décongélation selon la revendication 1 ou 2, **caractérisé en ce que** l'air chauffé est introduit dans le récipient (6) au moyen de la pompe (3) à travers l'ouverture d'amenée (15) et aspiré à travers l'ouverture de sortie (16).

4. Procédé de décongélation selon l'une des revendications 1 à 3, **caractérisé en ce que** les denrées alimentaires sont introduites dans le récipient (6) et en sont retirées par une ouverture commune de remplissage et de retrait qui est prévue sur le récipient (6), de préférence sur la face frontale et de préférence coaxialement à l'axe de rotation (5).

5. Procédé de décongélation selon l'une des revendications 1 à 4, **caractérisé en ce que** les denrées alimentaires sont introduites dans le récipient (6) au moyen d'une alimentation sous vide, de l'air étant aspiré du récipient (6) à travers l'ouverture de sortie (16) au moyen de la pompe (3) et les denrées alimentaires étant introduites par aspiration.

6. Procédé de décongélation selon l'une des revendications 1 à 5, **caractérisé en ce que** l'air chauffé est amené et/ou évacué coaxialement à l'axe de rotation (5) et/ou que l'axe de rotation (5) est prévu incliné par rapport à la verticale.

7. Procédé de décongélation selon l'une des revendications 1 à 6, **caractérisé en ce que** les denrées alimentaires sont introduites dans le récipient (6) par sa première face frontale (8) et/ou sont retirées du récipient (6) par sa deuxième face frontale (9) opposée à la première face frontale (8).

8. Procédé de décongélation selon l'une des revendications 1 à 7, **caractérisé en ce qu'**un appareil de climatisation (2) est prévu pour chauffer l'air, l'appareil de climatisation (2) étant de préférence prévu à distance du récipient (6) et l'air chauffé étant conduit de l'appareil de climatisation (2) vers l'ouverture d'amenée (15) par une conduite d'amenée (13).
